# EUROPEAN PATENT APPLICATION

(11) **EP 2 595 271 A1**
(43) Date of publication of application: **22.05.2013**
(21) Application number: 11806581.2
(22) Date of filing: 13.06.2011
(51) Int. Cl.: H02J 7/00, H01M 10/44, H01M 10/48

(54) **RECHARGEABLE ELECTRIC APPARATUS**

(30) Priority: 14.07.2010 JP 2010159440
(71) Applicant: Panasonic Corporation, Osaka 571-8501 (JP)
(72) Inventor: WATANABE, Kazunori, Osaka 540-6207 (JP); ASAKAWA, Koji, Osaka 540-6207 (JP); IWAO, Seiichi, Osaka 540-6207 (JP)
(74) Representative: Grünecker, Kinkeldey, Stockmair & Schwanhäusser
(86) International application number: PCT/JP2011/063454
(87) International publication number: WO 2012/008250

(57) **Abstract**

Under a control by a controller (14), a rechargeable electric device makes a full charge display to display on a display unit (15) that a secondary battery (11) is fully charged, after a start of charging the secondary battery (11) in a case where either when a count value of a counter reaches a first predetermined value (C1) corresponding to the full charge of the secondary battery (11), or when a duty ratio of switching signals which make an on/off control of a switching element (131) becomes smaller than or equal to a predetermined value (D) corresponding to the charge current obtained at a time of the full charge of the secondary battery (11).

## Description

### Technical field

The present invention relates to a rechargeable electric device for charging a secondary battery, and especially, relates to a rechargeable electric device displaying a remaining capacity of the secondary battery at the time of charging the secondary battery.

### Background Art

As this type of conventional technology, one described in PTL 1 is known. PTL 1 describes a technology for virtually estimating an present battery capacity by counting up a count value per constant time at the mode of charging the secondary battery, to thereby allow the displaying operation at a battery capacity display unit to have an interlocking property corresponding to the count value.

### Citation List

### Patent Literature

PTL 1: JP 7-264782 A

### Summary of Invention

According to the technology of PTL 1, there was such a fear as, when the charging operation was not interlocked with the full charge display, the waiting electric power might be increased due to continuation of the charging operation after the full charge display. Depending on the factor described above or the load condition, as the case may be, there was a fear of causing an error between the count value and the remaining capacity of the secondary battery. That is, the count value becomes mach smaller than the actual remaining capacity of the secondary battery, leaving remaining capacity of the second battery estimated by the count value to be considerably smaller than the actual remaining capacity of the secondary battery, thus developing a fear of causing a great error between the two.

It was feared that, when the charging operation is started in the above state, the count value does not reach the value corresponding to the full charge despite the secondary battery in the full charge state, and that it might be difficult in the display unit corresponding to the count value to accurately display a state of the full charge.

The present invention has been made in view of the above. It is an object of the present invention to provide a rechargeable electric device which has improved the accuracy of the remaining capacity display of the secondary battery.

For accomplishing the above object, a rechargeable electric device according to a first aspect of the present invention supplies a charge current to a secondary battery via a switching element to thereby charge the secondary battery, the charge current being defined by a duty ratio of switching signals which make an on/off control of the switching element, the rechargeable electric device includes: a counter for counting a count value corresponding to a charge time of the secondary battery; a display unit for displaying a remaining capacity of the secondary battery corresponding to the count value counted by the counter; and a controller for making a full charge display to display on the display unit that the secondary battery is fully charged, after a start of the charging of the secondary battery, in a case where either when the count value of the counter reaches a first predetermined value corresponding to the full charge of the secondary battery or when the duty ratio of the switching signals becomes smaller than or equal to a predetermined value corresponding to the charge current obtained at a time of the full charge of the secondary battery.

With the rechargeable electric device according to the first aspect of the present invention, the full charge display is implemented when the count value reaches the value corresponding to the full charge of the secondary battery or when the duty ratio becomes smaller than or equal to the value corresponding to the charge current obtained at the time of the full charge, thus enabling to more accurately display the full charge.

### Brief Description of Drawings

[Fig. 1] Fig. 1 illustrates a structure of a rechargeable electric device according to a first embodiment.
[Fig. 2] Fig. 2 illustrates LED 1 to LED 5 of a display unit relative to the count values in the rechargeable electric device according to the first embodiment.
[Fig. 3] Fig. 3 illustrates that the LED 1 to LED 5 of the display unit in the rechargeable electric device according to the first embodiment make displaying operations in a stepwise manner.
[Fig. 4] Fig. 4 is a flowchart illustrating procedures of the displaying operation by the display unit in the rechargeable electric device according to the first embodiment.
[Fig. 5] Fig. 5 is a flowchart illustrating procedures of the displaying operation by the display unit in the rechargeable electric device according to a second embodiment.
[Fig. 6] Fig. 6 illustrates a display example of the LED 1 to LED 5 of the display unit in the rechargeable electric device according to the first embodiment.
[Fig. 7] Fig. 7 illustrates a display example of the LED 1 to LED 5 of the display unit in the rechargeable electric device according to the second embodiment.

### Description of Embodiments

Hereinafter, embodiments will be explained using drawings.

### (First Embodiment)

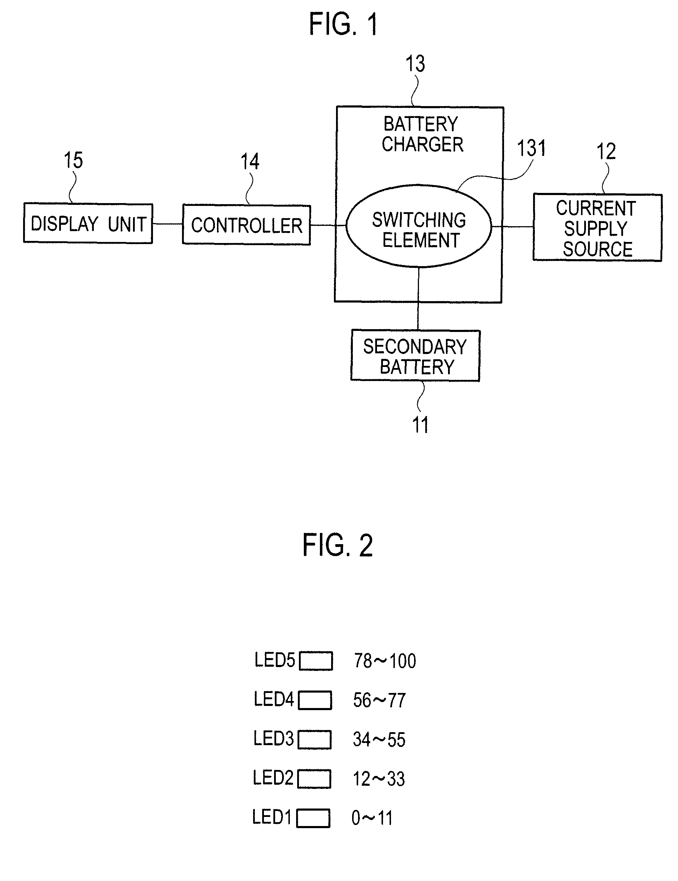

A rechargeable electric device according to a first embodiment illustrated in Fig. 1 includes a secondary battery 11, a current supply source 12, a battery charger 13, a controller 14, and a display unit 15.

The secondary battery 11 includes, for example, a nickel-metal hydrogen battery, a nickel-cadmium battery, or the like, and is charged with a charging current supplied from the current supply source 12 by way of the battery charger 13.

The current supply source 12 supplies a direct current to the battery charger 13. The direct current is supplied from, for example, a commercial AC power source of about 100 V to 240 V by way of an AC adapter.

The battery charger 13 includes a switching element 131 such as transistor. The switching element 131 is connected between the secondary battery 11 and the current supply source 12. The switching element 131 receives the direct current supplied from the current supply source 12, controls and adjusts the charge current supplied to the secondary battery 11 by the PWM control for making an on/off control of the switching element 131 based on a switching signal.

The controller 14 functions as a controlling center for controlling operations of the rechargeable electric device, and is realized by a microcomputer or the like (equipped with hardware resources such as CPU and memory) which are necessary for controlling various operational processes based on programs. Implementing the process programs by the CPU of the microcomputer included in the controller 14 realizes various functions for displaying the charging operation and remaining capacity of the secondary battery 11.

The controller 14 supplies the switching signal to the switching element 131, and, based on the switching signal, makes the on/off control of the switching element 131, to thereby implement the pulse width modulation (PWM) control. Increase/decrease of the charge current is controlled by variably controlling the duty ratio of the switching signal by the PWM control. The controller 14 supplies to the secondary battery 11, for example, the desired charge current according to the battery voltage of the secondary battery 11, to thereby control the charge of the secondary battery 11. The battery voltage of the secondary battery 11 relative to the duty ratio is memorized as a preset table data, for example, in a memory or the like of the controller 14. In the charging operation of the secondary battery 11, as the remaining capacity approaches the full charge with the increase of the battery voltage of the secondary battery 11, the duty ratio of the switching signal becomes smaller, thus controlling to make the charge current smaller.

The controller 14 includes a counter for adding (counting up) the count value per constant time in the charging operation. As set forth above, the counter virtually estimates the present remaining capacity of the secondary battery 11 by the count value, to thereby implement the displaying operation at the display unit 15 based on the count value. The count value increases and decreases between, for example, 0 to 100, and is so set that the remaining capacity is in the range of 0% to 20% with the count value 0 to 11, the remaining capacity is in the range of 21% to 40% with the count value 12 to 33, the remaining capacity is in the range of 41 % to 60% with the count value 34 to 55, the remaining capacity is in the range of 61 % to 80% with the count value 56 to 77, and the remaining capacity is in the range of 81% to 100% with the count value 78 to 100. The controller 14 has a function of controlling the count up of the counter to thereby set the count value to an arbitrary value.

The display unit 15 includes, for example, five LEDs 1 to 5 arranged longitudinally. The display unit 15 has the LEDs 1 to 5 assigned to correspond to the count values of the counter, as illustrated in Fig. 2. In Fig. 2, the LED 1 is assigned to correspond to the count values 0 to 11, the LED 2 is assigned to correspond to the count values 12 to 33, the LED 3 is assigned to correspond to the count values 34 to 55, the LED 4 is assigned to correspond to the count values 56 to 77, and the LED 5 is assigned to correspond to the count values 78 to 100.

In the charging operation of the secondary battery 11, the display unit 15 displays such that the LED corresponding to the present count value of the counter blinks, the LED corresponding to the count value smaller than the present count value is lighted, and the LED corresponding to the count value larger than the present count value is turned off. For example, when the count value is "50," the display unit 15 displays that the LEDs 1 and 2 are lighted, the LED 3 blinks, and the LEDs 4 and 5 are turned off, to thereby display the charge state (remaining capacity) of the secondary battery 11.

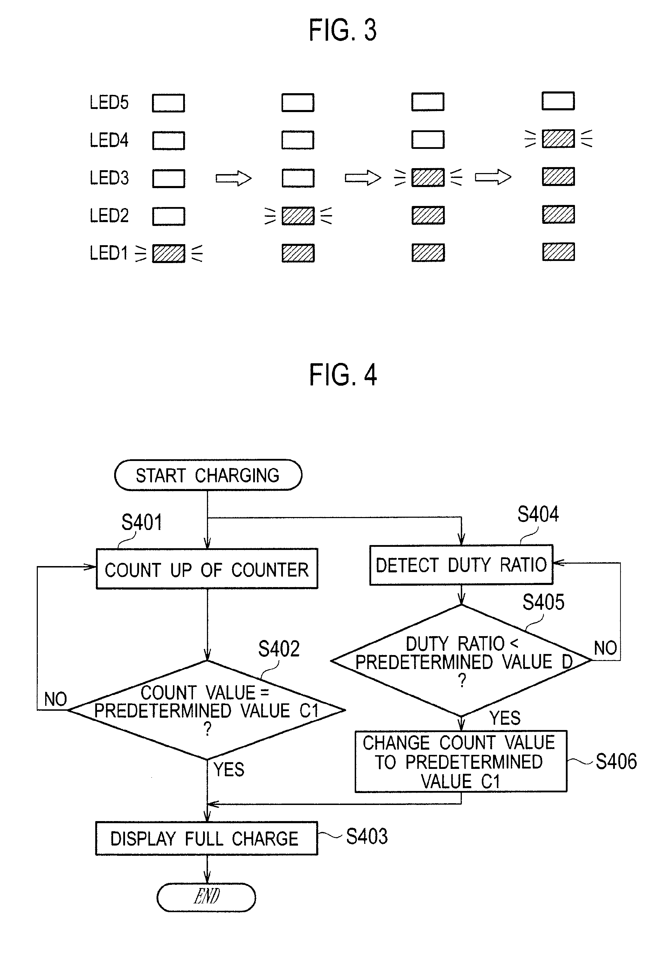

Under the control of the controller 14, the display unit 15 is so controlled that the remaining capacity of the secondary battery 11 can be displayed at five steps in sequence by the five LEDs 1 to 5. That is, as illustrated in Fig. 3, after the LED 1 blinks and is lighted, the LED 2 blinks and is lighted, that is, blinking and lighting are displayed in a stepwise manner in the order of LED 1, LED 2, LED 3, LED 4, and LED 5.

Fig. 4 is a flowchart illustrating the procedures of the displaying operation processes of the display unit 15 at the time of charging the secondary battery 11.

In Fig. 4, first, when the remaining capacity of the secondary battery 11 estimated by the count value is smaller than the actual remaining capacity of the secondary battery 11, the charge current is supplied to the secondary battery 11 under the control by the controller 14, to thereby start charging the secondary battery 11. Then, the counter makes count up per preset constant time, to thereby add the count value (step S401). Then, it is determined whether or not the count value has reached a predetermined value C1, herein "100" (step S402).

As a result of the determination, when the count value has reached the predetermined value C1 = 100, it is estimated that the secondary battery 11 is fully charged with the remaining capacity 100%, and it is displayed by lighting all the LED 1 to LED 5 of the display unit 15 that the full charge is made (step S403). On the other hand, when the count value has not reached the predetermined value C1= 100, it is estimated that the secondary battery 11 is not fully charged yet, and back in the former step S402, the count up operation of the counter is continued. This so controls the LED 1 to LED 5, which correspond to the count values, as to blink and to be lighted for display.

In parallel with the series of processes illustrated by the steps S401 to S403, the processes illustrated by steps S404 to S406 are implemented. That is, when the charging operation is started, the duty ratio of the switching signal supplied to the switching element 131 of the battery charger 13 is detected (step S404). Then, it is determined whether or not the duty ratio of the switching signal is smaller than or equal to a predetermined value D (step S405). Herein, the predetermined value D is set to the duty ratio of the switching signal that generates the charge current supplied to the secondary battery 11 when the secondary battery 11 is fully charged.

As a result of the determination, when the duty ratio is smaller than or equal to the predetermined value D, it is estimated that the secondary battery 11 is fully charged with the remaining capacity 100%, to thereby change the count value of the counter to the predetermined value C1, herein "100" (step S406). Then, all the LEDs 1 to 5 of the display unit 15 are lighted, to thereby display that the full charge is made (step S403).

On the other hand, when the duty ratio is neither smaller than nor equal to the predetermined value D, it is estimated that the secondary battery 11 is not fully charged yet, and back in the former step S404, the detecting operation of the duty ratio is continued.

As set forth above, according to the first embodiment, it is so configured that, in parallel with the displaying operation (by the display unit 15) interlocked with the count value, the display unit 15 displays the full charge when the duty ratio of the switching signal which defines the charge current becomes smaller than or equal to the value which corresponds to the charge current obtained when the secondary battery 11 is fully charged. Consequently, even when the count value is not the one that corresponds to the full charge, the display unit 15 can display that the secondary battery 11 is fully charged. Thus, compared with the conventional technology which displays the full charge based only on the count value, the accuracy of the full charge display can be improved.

### (Second Embodiment)

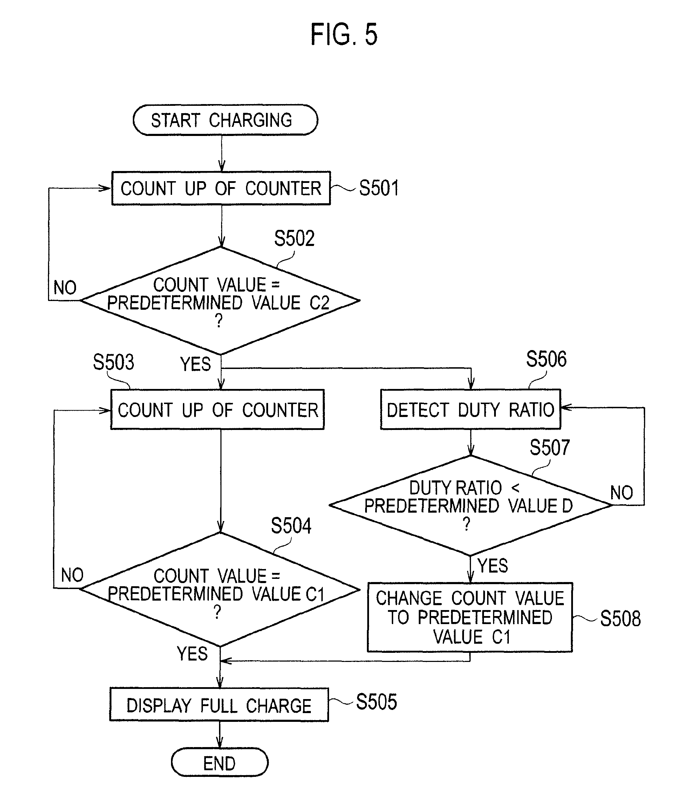

In accordance with a rechargeable electric device according to a second embodiment, Fig. 5 is a flowchart illustrating procedures of the displaying operation processes by the display unit 15 at the time of charging the secondary battery 11. The procedures illustrated in the flowchart of Fig. 5 have such a characteristic as that, compared with the procedures illustrated in Fig. 4, the processes at steps S501 and S502 are added before the processes at steps S401 and S404 in Fig. 4 after starting the charging, with other characteristics being like those in Fig. 4. Thus, in Fig. 5, the steps S503 to S505 are like the steps S401 to S403 in Fig. 4 while steps S506 to S508 are like steps S404 to S406 in Fig. 4.

In Fig. 5, first, the charging of the secondary battery 11 is started, and the counter makes count up per preset constant time, to thereby add the count value (step S501). Then, it is determined whether or not the count value has reached a predetermined value C2, herein "90" (step S502).

As a result of the determination, when the count value has not reached the predetermined value C2 = 90, it is estimated that the secondary battery 11 is not fully charged, and back in the former step S402, the count up operation of the counter is continued. This so controls the LEDs 1 to 5, which correspond to the count values, as to blink and to be lighted for display. On the other hand, when the count value has reached the predetermined value C2 = 90, it is estimated that, though the secondary battery 11 is not fully charged, the remaining capacity is charged up to about 90% of the full charge state, thus displaying blinking of the LED 5 of the display unit 15.

Then, the processes like the former procedures illustrated in Fig. 4 are implemented, to thereby perform display of the full charge after it is determined that the secondary battery 11 is in the full charge state.

In the procedures according to the first embodiment, if the charge is started with the count value of "20" in a substantially full charge state of the remaining capacity of the secondary battery 11, a display skip was likely to occur.

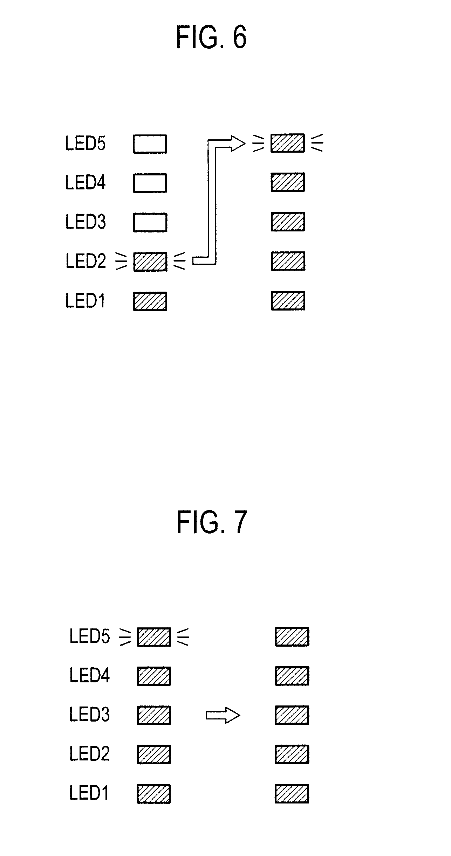

In the above state, the duty ratio is already smaller than or equal to the predetermined value D relative to the center value "20". Due to this, the count value is changed from "20" to "100," then, as illustrated in Fig. 6, it is moved from the state in which the LED 2 corresponding to the count value "20" is blinking to a display state of the full charge with the LED 2 to the LED 5 instantly lighted. In this display mode, it was likely to give a feeling of strangeness to a viewer of the display unit 15.

Thus, according to the second embodiment, adding the above processes can accomplish such a display that the LEDs blink and are lighted in sequence corresponding to the count values, and the LED 5 blinks followed by lighting of the LED 5, thus enabling to perform display of the full charge, as illustrated in Fig. 7. This suppresses the display unit 15 from causing the display skip, thus preventing the user from feeling strange.

### Industrial Applicability

The rechargeable electric device according to the embodiments is applicable, for example, to an electric razor, an electric shaver, a depilatory device, an electric toothbrush, and the like.

## Claims

1. A rechargeable electric device for supplying a charge current to a secondary battery via a switching element to thereby charge the secondary battery, the charge current being defined by a duty ratio of switching signals which make an on/off control of the switching element, the rechargeable electric device comprising:
a counter for counting a count value corresponding to a charge time of the secondary battery;
a display unit for displaying a remaining capacity of the secondary battery corresponding to the count value counted by the counter; and
a controller for making a full charge display to display on the display unit that the secondary battery is fully charged, after a start of the charging of the secondary battery, in a case where either when the count value of the counter reaches a first predetermined value corresponding to the full charge of the secondary battery or when the duty ratio of the switching signals becomes smaller than or equal to a predetermined value corresponding to the charge current obtained at a time of the full charge of the secondary battery.

2. The rechargeable electric device according to claim 1, wherein
the display unit displays the remaining capacity of the secondary battery in a stepwise manner.

3. The rechargeable electric device according to claim 1 or 2, wherein
the controller is displayed the remaining capacity of the secondary battery which capacity corresponds to the count value of the counter to the display unit, after the start of charging the secondary battery and before the count value of the counter reaches the first predetermined value and until the count value reaches a second predetermined value.
